# EUROPEAN PATENT SPECIFICATION

(11) **EP 4 461 488 B1**
(45) Date of publication and mention of the grant of the patent: **15.10.2025**
(21) Application number: 24175002.5
(22) Date of filing: 09.05.2024
(51) Int. Cl.: B27D 5/00, B23D 47/04, B27B 27/02, B27B 5/04

(54) **MACHINE FOR WORKING STRIPS**
MASCHINE ZUM BEARBEITEN VON BÄNDERN
MACHINE POUR TRAVAILLER DES BANDES

(30) Priority: 11.05.2023 IT 202300009453
(43) Date of publication of application: 13.11.2024
(73) Proprietor: MONGUZZI & FISCHER+RUCKLE S.R.L., 20900 Monza (IT)
(72) Inventor: MONGUZZI, Paolo, 20061 Carugate (IT); MONGUZZI, Matteo, 20061 Carugate (IT)
(74) Representative: Pizzoli, Antonio Mario

(56) References cited:
- DE-A1- 3 447 649
- US-A- 5 992 488

## Description

### Technical field

The present description concerns a machine for working strips, in particular for cutting and finishing the longitudinal edges of one or more overlapping sheets of wood or other material, for example strips of wood that can be used to veneer walls or furniture.

### Background of the description

The prior art comprises a machine which comprises locking means which are configured to lock one or more strips against an abutment element in a locked position. These locking means are arranged alongside the trajectory of a carriage which moves with a reciprocating movement with respect to a base and which can carry a tool for working a strip locked by the locking means. In this way, the machine can machine, in particular saw or mill, an edge of this strip in the locked position. The edge opposite to the edge to be machined, during the insertion of the strip into the locking means in their unlocked position, comes into contact with a second abutment element, called register, which can be moved horizontally in the machine to adjust the position of the strip with respect to said trajectory. After this first working phase, the locking means are released, the strip is manually extracted by an operator from the locking means and then manually overturned onto a support arranged beside the locking means, as well as manually reinserted and locked in the locking means to work the edge opposite to the one already Further prior art can be found in DE 34 47 649 A which discloses a machine for working strips, comprising a base, a carriage and first locking means, wherein the carriage is configured to move with respect to the base with a reciprocating movement along a trajectory (T) and wherein the machine is configured to receive a tool for working a strip.

A technical problem of this known machine consists in the imprecise adjustment of the position of the strip during the working of the first edge, as the opposite edge may not be perfectly straight or flat, so that the strip may not be perfectly aligned with the second abutment element or with the trajectory of the carriage.

Furthermore, the extraction, overturning and reinsertion of the strip are performed manually, so it is possible that the strip is not correctly repositioned in the locking means, especially when the strip is made up of a pack of overlapping wooden strips.

### Summary of the description

The object of this description is therefore to provide a machine which solves these technical problems. Said object is achieved with a machine, the main characteristics of which are specified in the attached claims, to be considered an integral part of this description.

Thanks to the particular rotor which comprises the first locking means, the machine according to the present description allows the strip to be rotated around an axis substantially parallel to said trajectory, so that both edges of the strip can be machined in a precise, simple, and fast manner.

The rotor is preferably provided with second locking means and/or a pusher, which interact with the first locking means to improve the precision of the machining, in particular allowing a fully automated control of all the machining phases of both edges of the strip, even when the strip comprises a plurality of superimposed layers.

The pusher is preferably arranged under the rotor and/or can move in a direction substantially vertical and/or perpendicular to said trajectory, so that the strip can be moved by the pusher to an unlocked position in the rotor to precisely adjust the position of the strip for the working of the second edge, given that the first edge, already worked and therefore perfectly flat, comes into contact with the abutment element of the pusher, which therefore acts as a register.

The first and second locking means preferably comprise pressers which can be driven along directions substantially parallel or aligned with each other, so that they can cooperate with each other during the phases of locking, unlocking, rotation and working of the strip, thus improving automation, precision, and working speed of the machine.

The rotor preferably comprises two abutment elements which can be aligned with the pressers of the first and second locking means, so that the strip can be easily and conveniently moved to the unlocked position in the rotor to simplify the operation of the machine.

The machine preferably also comprises a second carriage which is provided with a particular applicator for applying a layer of adhesive on the edges of the strip. Thanks to the synergy among the two carriages, the locking means and the rotor, the machine can therefore saw, mill and apply the adhesive to the strip in a precise and automatic manner.

### Brief description of the drawings

Further advantages and characteristics of the machine according to the present description will be evident to those skilled in the art from the following detailed description of some embodiments, to be considered non-limiting examples of the claims, with reference to the attached drawings in which:
- figure 1 is an axonometric view of an embodiment of the machine in a first operating phase;
- figure 2 is a top view of the machine of figure 1;
- figure 3 is a front view of the machine of figure 1;
- figure 4 is a side view of the machine of figure 1;
- figure 5 is the enlarged section V-V of figure 3;
- figure 6 is an axonometric view of the machine of figure 1 in a second operating phase;
- figure 7 is a top view of the machine of figure 6;
- figure 8 is a front view of the machine of figure 6;
- figure 9 is a side view of the machine of figure 6;
- figure 10 is the enlarged section X-X of figure 8;
- figure 11 is an axonometric view of the machine of figure 1 in a third operating phase;
- figure 12 is a top view of the machine of figure 11;
- figure 13 is a front view of the machine of figure 11;
- figure 14 is a side view of the machine of figure 11;
- figure 15 is the enlarged section XV-XV of figure 13;
- figure 16 is an axonometric view of the machine of figure 1 in a fourth operating phase;
- figure 17 is a top view of the machine of figure 16;
- figure 18 is a front view of the machine of figure 16;
- figure 19 is a side view of the machine of figure 16;
- figure 20 is the enlarged section XX-XX of figure 18.

### Exemplary embodiments

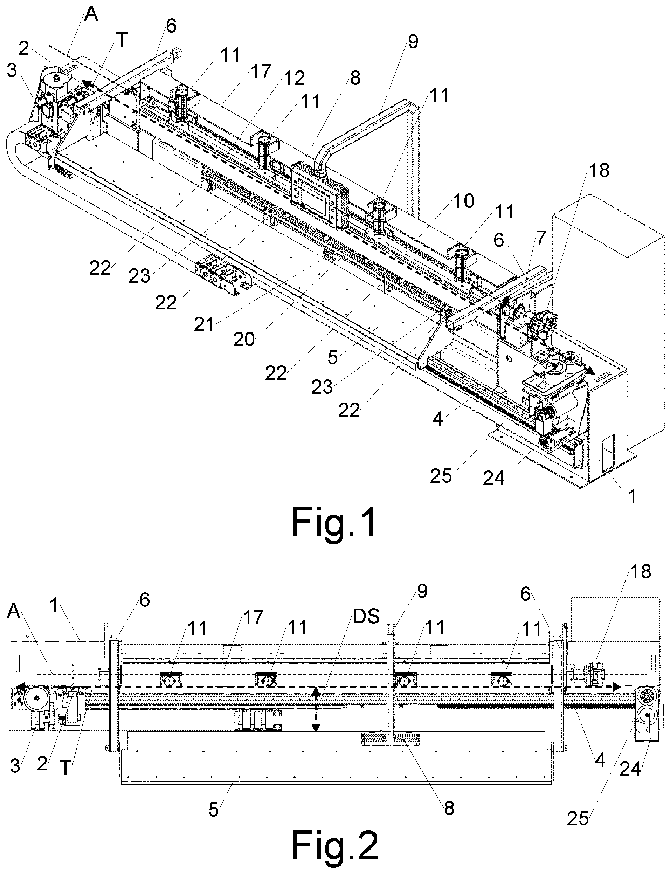

Figures 1 to 5 show an embodiment of the machine according to the present description, which comprises a base 1 which can be provided with a tool 2 to machine a strip, for example one or more overlapping and/or aligned strips. The tool 2 can comprise for example a circular saw with a substantially horizontal rotation axis for sawing an edge of a strip and a milling cutter with a substantially vertical rotation axis for smoothing an edge of a strip. In the embodiment of the figures, the tool 2 comprises a circular saw. The tool 2 can be mounted on a carriage 3 which is configured to receive the tool 2 and can move on a rail 4 relative to the base 1, so that the tool 2 can move in a reciprocating motion along a trajectory T, in particular a substantially straight and/or substantially horizontal trajectory (lateral or transversal if the normal orientation of the machine shown in the figures is considered). Preferably, the tool 2 can also move with respect to the carriage 3, for example to be moved by an actuator in a direction substantially perpendicular to the trajectory T from an operating position to a rest position, and vice versa. The carriage 3 can be driven by a motor, preferably an electric motor which is mounted on the carriage 3 and is connected to a drive wheel to move on the rail 4.

A support 5, in particular a table between two side walls, which is configured to support the strips to be worked or already worked, scraps, or other, can be fixed to the base 1 next to the trajectory T, so that these strips can be moved from/to the support 5 to/from the trajectory T before/after their machining by the tool 2. One or more extensions 6 driven by an actuator 7, for example comprising an electric, hydraulic or pneumatic cylinder, are arranged between the support 5 and the base 1 to move the support 5 with respect to the base 1 in a movement direction DS substantially perpendicular to the trajectory T, in particular a substantially horizontal direction, so as to bring the support 5 closer or further away to or from the trajectory T. The support 5 is fixed to two extensions 6. The base 1 can comprise a laser projector for projecting a light line along the trajectory T.

A control panel 8 which allows an operator to control the machine can be cantilevered above the support 5 by means of an arm 9, preferably orientable, articulated and/or arched, which can be fixed behind the base 1.

The machine comprises first locking means, which in particular comprise a presser 10 which can be driven by one or more actuators 11, for example comprising four electric, hydraulic or pneumatic cylinders, from an unlocked position to a locked position, and vice versa. The first locking means are arranged alongside the trajectory T to lock a strip 12, in particular a plurality of overlapping strips, against a first abutment element 13 which can comprise one or more flat surfaces configured to come into contact with a first surface between two edges of the strip 12. The presser 10 can be driven in a first direction D1 substantially perpendicular to the trajectory T. When the presser 10 is driven by the actuators 11 towards the first abutment element 13, the strip 12 is locked by the first means of locking between the presser 10 and the first abutment element 13 in the locked position.

Preferably, the machine also comprises second locking means, which in particular comprise a presser 14 which can be driven by one or more actuators 15, for example comprising four electric, hydraulic or pneumatic cylinders, from an unlocked position to a locked position, and vice versa. The second locking means are arranged alongside the trajectory T to lock the strip 12 against a second abutment element 16 which can comprise one or more flat surfaces configured to come into contact with a second surface between two edges of the strip 12. The presser 14 can be driven in a second direction D2 substantially perpendicular to the trajectory T. When the presser 14 is driven by the actuators 15 towards the second abutment element 16, the strip 12 is locked by the second locking means between the presser 14 and the second element of bar 16.

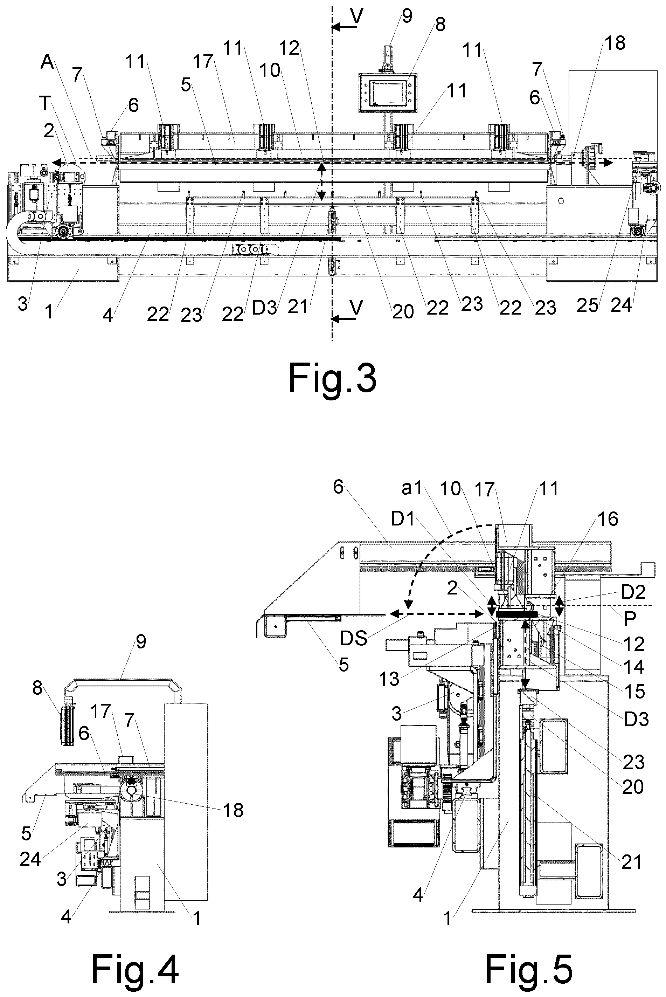

Preferably, the presser 10 of the first locking means, in the unlocked position, is arranged alongside, in particular aligned, to the second abutment element 16, and/or the presser 14 of the second locking means, in the unlocked position, is arranged alongside, in particular aligned as shown in figure 5, to the first abutment element 13.

In the present embodiment, the first direction D1 of drive of the presser 10 of the first locking means is substantially parallel to the second direction D2 of drive of the presser 14 of the second locking means. In other embodiments the first direction D1 can be substantially aligned with the second direction D2, in which case the presser 10 comprises the second abutment element 16 and the presser 14 comprises the first abutment element 13.

Preferably, the first and second locking means are arranged in a substantially opposite manner with respect to a plane P which is substantially parallel to the trajectory T and passes between the locking means in the unlocked position, i.e. it passes through a space which can be occupied by the strip 12 when it is locked by the locking means.

The first and second locking means are fixed to a rotor 17 which comprises the abutment elements 13, 16 and can rotate with respect to the base 1 around an axis A substantially parallel to the trajectory T, in particular by means of an electric motor 18 fixed to the base 1. The rotor 17 comprises an elongated structure which supports the locking means and comprises a central cavity configured to accommodate the strip 12 between the locking means.

Preferably, the machine comprises a pusher 20 which can be driven, in particular by means of an actuator 21, for example comprising an electric, hydraulic or pneumatic cylinder, to move the strip 12 into the unlocked position in the rotor 17.

Preferably, the pusher 20 is arranged under the rotor 17 and/or can move with respect to the base 1 by means of one or more guides 22 in a third direction D3 substantially perpendicular to the trajectory T, in particular substantially vertical. In particular, the pusher 20 may comprise a bar with a longitudinal axis which is substantially parallel to the trajectory T. The pusher 20 may also comprise one or more abutment elements 23, in particular comprising one or more fins, which are configured to enter into contact with an edge of the strip 12.

Preferably, the machine comprises a second carriage 24 which can move with respect to the base 1 with a reciprocating movement along the trajectory T, in a synchronized or alternating manner with the first carriage 3. The second carriage 24 can be driven by a motor, preferably an electric motor which is mounted on the carriage 24 and is connected to a driving wheel to move on the rail 4. The second carriage 24 comprises an applicator 25, in particular comprising a roller with a substantially vertical axis of rotation, configured to apply a layer of adhesive on an edge of the strip 12 after this edge has been machined by the tool 2.

The motor of the carriage 3, the actuators 7 of the extensions 6, the control panel 8, the actuators 11, 15 of the locking means, the motor 18 of the rotor 17 and/or the actuator 21 of the pusher 20 are connected to a control unit (not visible in the figures), in particular a programmable electronic control unit, so that their operation can be controlled by the control unit manually, semi-automatically or fully automatically.

During use, in an operating phase not shown in the figures, an operator places a strip 12, for example comprising a plurality of overlapping sheets, on the support 5, which is adjacent to the trajectory T, after which he pushes the strip 12 into the cavity of the rotor 17 in the desired working position, which can be verified by the operator himself using the light line projected by the laser projector onto the strip 12 in correspondence with the trajectory T. The operator can then set the final width of the strip 12 using the control panel 8 and start working the strip 12, also automatically.

Once the machining procedure has started, the support 5 is moved away from the trajectory T in the direction of movement DS and the locking means are activated, in particular the presser 10 of the first locking means, so as to lock the strip 12 in the rotor 17 in the locked position, after which the tool 2 and the carriage 3 are driven, so that the tool 2 can machine the strip 12 by moving along the trajectory T, for example cutting and/or milling the strip 12, to obtain a first machined edge, in particular the edge of the strip 12 arranged on the trajectory T and facing the support 5. The second carriage 24 can be operated on the trajectory T to apply a layer of adhesive on the first machined edge of the strip 12.

In the operating phase shown in figures 1 to 5, the first edge of the strip 12 has already been machined by the tool 2 and the carriage 3 is moved to a rest position towards an end of the trajectory T, after which the rotor 17 will be rotated around the axis A for an angle a1, in particular substantially equal to 90°, so that the first edge of the strip 12 will face towards the pusher 20, in particular downwards.

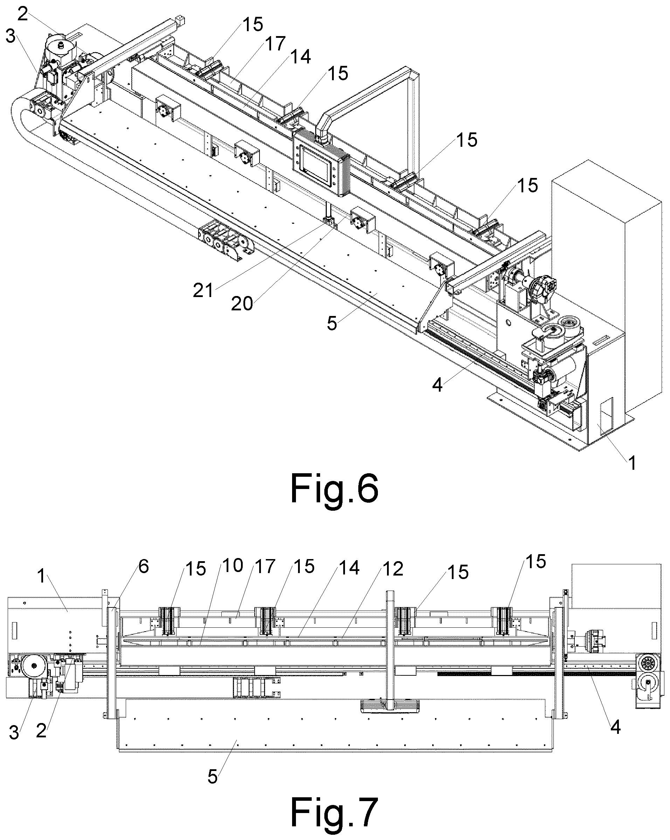

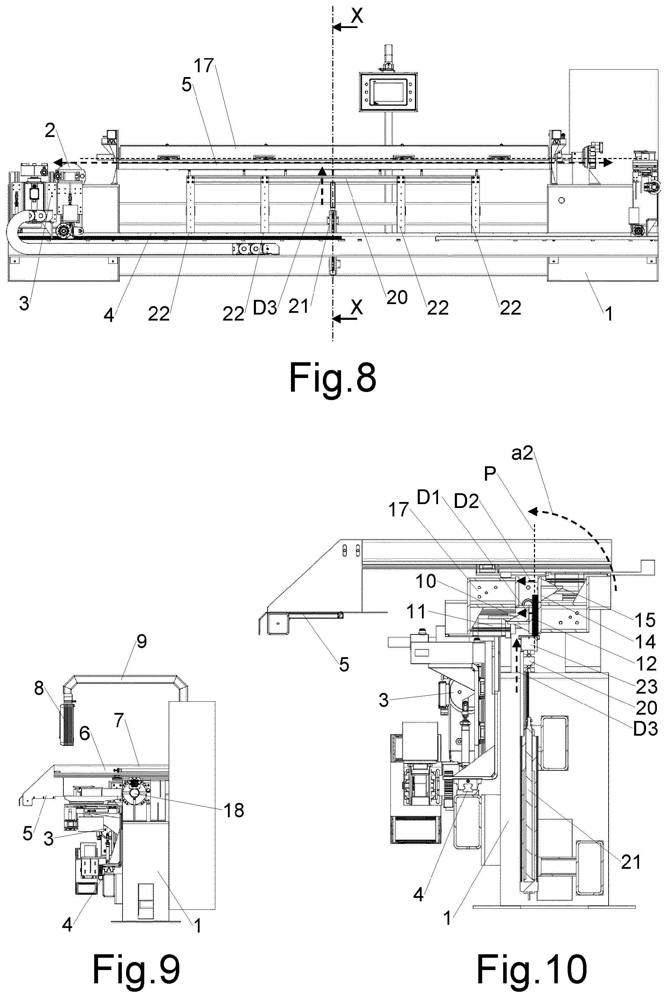

In the operating phase shown in figures 6 to 10, the strip 12 has already been rotated by the rotor 17, so that the plane P is substantially vertical. The pusher 20 is driven in the third direction D3, in particular upwards, until it comes into contact with the first edge of the strip 12 locked in the rotor 17, after which one of the two pressers 10, 14 is driven away from the other presser in the unlocked position. In particular, the presser 10 of the first locking means is moved in the first direction D1, so that the strip 12 is then in the unlocked position in the rotor 17 between the pressers 10, 14. In this unlocked position, the distance between the pressers 10, 14 allows the passage of the pusher 20 between the pressers 10, 14, in particular being substantially equal to the thickness of the pusher 20. The pusher 20 then pushes the strip 12 in the third direction D3 to a position in which a second edge, still to be machined, of the strip 12, opposite to the first machined edge of the strip 12, protrudes from the cavity of the rotor 17 beyond the pressers 10, 14, after which one of the two pressers 10, 14 is operated towards the other presser. In particular, the presser 14 of the second locking means is moved in the second direction D2, so that the strip 12 returns to the locked position. The pusher 20 then moved the strip 12 along the third direction D3 for a certain distance, manually by the operator and/or automatically by the control unit, in particular depending on the desired final width of the strip 12.

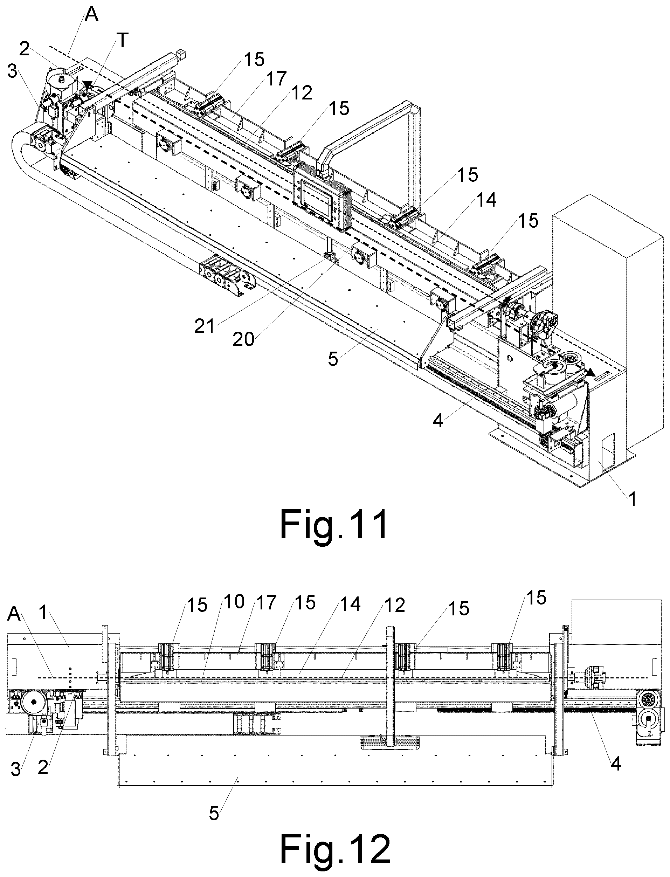

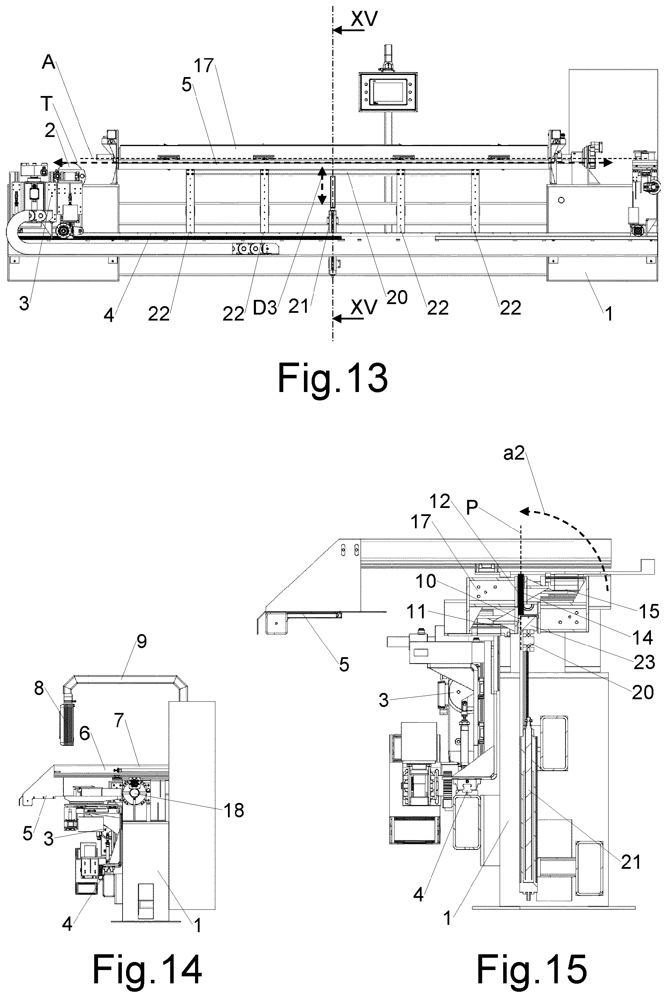

In the operating phase shown in figures 11 to 15, the strip 12 is in the locked position between the pressers 10 and 14, in which the plane P between the pressers 10, 14 is substantially vertical and the strip 12 is also moved in the rotor cavity 17 in the first direction D1 and/or in the second direction D2 compared to the previous operating phase. The pusher 20 is then moved away from the rotor 17 in the third direction D3, in particular downwards, after which the rotor 17 will be rotated around the axis A by an angle a2, in particular substantially equal to 90°, in the same direction as the previous rotation for the angle a1.

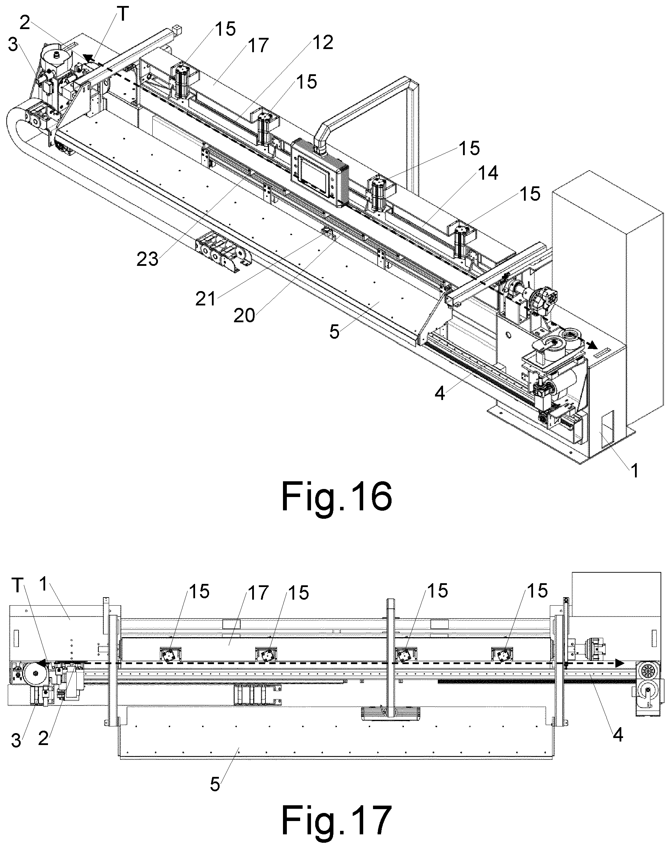

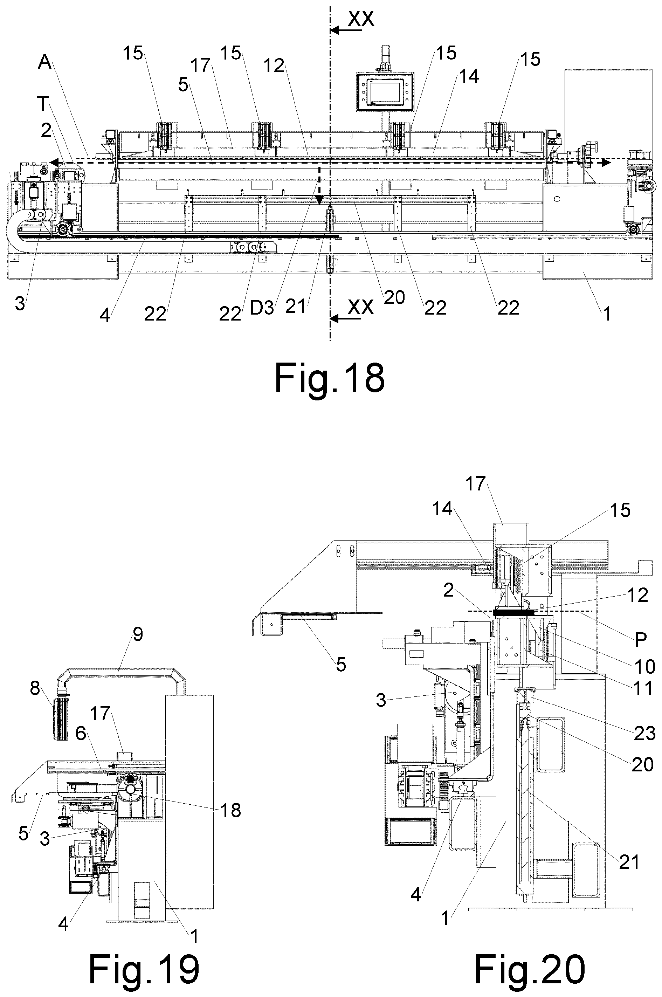

In the operating phase shown in figures 16 to 20, the strip 12 is already in the locked position in the rotated rotor 17, with the second edge to be machined of the strip 12 ready to be machined by the tool 2 along the trajectory T. Compared to the initial phase, the rotor 17 is therefore rotated by an angle a = a1+a2, in particular an angle substantially equal to 180°, so that the strip 12 is substantially overturned with respect to the axis A, in particular vertically overturned. At this point the tool 2 can move along the trajectory T thanks to the carriage 3 to work the second edge of the strip 12. The second carriage 24 can be operated on the trajectory T to apply a layer of adhesive on the second machined edge of the strip 12.

At the end of the working, the support 5 is brought closer to the trajectory T and the locking means are activated to unlock the strip 12, so that the worked strip 12 can be extracted from the machine. In this operating phase the machine is already ready to work a new strip.

During the working of the strip 12 with the tool 2, the support 5 is preferably arranged at a distance from the strip 12 substantially equal to the size of the tool 2 along the trajectory T, so that the scraps caused by the working of the strip 12 can fall by gravity onto the support 5.

In this text, the terms "a/an/one", "two", etc. mean respectively "at least one", "at least two", etc., unless otherwise specified. Similarly, angles, proportions and values mentioned in the specification and/or shown in the drawings comprise a tolerance of at least 5%, unless otherwise specified. The term "strip" should be understood in its broadest meaning as any element of wood or other material that has a thickness less than its largest dimension, in particular less than its longitudinal dimension or length. The term "fixing" must be understood in its broadest meaning of direct union or through one or more intermediate elements, fixed or mobile.

Variants or additions can be made by those skilled in the art to the embodiments described and illustrated herein while remaining within the scope of the following claims. In particular, further embodiments may comprise the technical characteristics of one of the following claims with the addition of one or more technical characteristics described in the text or illustrated in the drawings, taken individually or in any reciprocal combination and including their equivalent characteristics.

## Claims

1. Machine for working strips (12), which comprises a base (1), a carriage (3) and first locking means (10, 11), wherein the carriage (3) is configured to move with respect to the base (1) with a reciprocating movement along a trajectory (T), wherein the carriage (3) is configured to receive a tool (2) for working a strip (12) along the trajectory (T) during the movement of the carriage (3), wherein the first locking means (10, 11) are arranged alongside the trajectory (T) to lock the strip (12) against a first abutment element (13) from an unlocked position to a locked position, wherein the first locking means (10, 11) are fixed to a rotor (17) which comprises the first abutment element (13) and can rotate with respect to the base (1) around an axis (A) substantially parallel to said trajectory (T), so that the strip (12) in the locked position is locked in the rotor (17) to be rotated by the rotor (17).

2. Machine according to the preceding claim, wherein the rotor (17) also comprises second locking means (14, 15) and a second abutment element (16) for locking the strip (12) from an unlocked position to a locked position in the rotor (17).

3. Machine according to the preceding claim, wherein the first locking means (10, 11) and the second locking means (14, 15) are arranged in a substantially opposite manner with respect to a plane (P) which is substantially parallel to said trajectory (T) and passes between the first and second locking means (10, 11, 14, 15) in their unlocked position.

4. Machine according to one of the preceding claims, which also comprises a pusher (20) configured to move the strip (12) in the unlocked position in the rotor (17).

5. Machine according to the preceding claim, wherein the pusher (20) is arranged under the rotor (17).

6. Machine according to claim 4 or 5, wherein the pusher (20) can move with respect to the base (1) in a third direction (D3) substantially vertical and/or substantially perpendicular to said trajectory (T).

7. Machine according to one of the preceding claims, wherein said first and/or second locking means (10, 11; 14, 15) comprise a presser (10; 14) which can be driven by one or more actuators (11; 15).

8. Machine according to the preceding claim, wherein the presser (10) of the first locking means (10, 11), in the unlocked position, is adjacent to and/or aligned with the second abutment element (16) and/or the presser (14) of the second locking means (14, 15), in the unlocked position, is adjacent to and/or aligned with the first abutment element (13).

9. Machine according to claim 7 or 8, wherein the first direction (D1) of drive of the presser (10) of the first locking means (10, 11) is substantially parallel to or substantially aligned with the second direction (D2) of drive of the presser (14) of the second locking means (14, 15).

10. Machine according to one of claims 7 to 9, wherein the distance between the pressers (10, 14), in their unlocked position, is substantially equal to the thickness of the pusher (20).

11. Machine according to one of the preceding claims, which comprises a second carriage (24) configured to move with respect to the base (1) with a reciprocating movement along said trajectory (T), wherein the second carriage (24) comprises an applicator (25) configured to apply a layer of adhesive on the strip (12).

## Patentansprüche

1. Maschine zum Bearbeiten von Bändern (12), die eine Basis (1), einen Schlitten (3) und erste Verriegelungsmittel (10, 11) umfasst, wobei der Schlitten (3) dazu ausgelegt ist, sich in Bezug auf die Basis (1) mit einer Hin- und Herbewegung entlang einer Bewegungsbahn (T) zu bewegen, wobei der Schlitten (3) dazu ausgelegt ist, ein Werkzeug (2) zum Bearbeiten eines Bands (12) während der Bewegung des Schlittens (3) entlang der Bewegungsbahn (T) aufzunehmen, wobei die ersten Verriegelungsmittel (10, 11) entlang der Bewegungsbahn (T) angeordnet sind, um das Band (12) von einer entriegelten Position in eine verriegelte Position gegen ein erstes Anschlagelement (13) zu verriegeln, wobei die ersten Verriegelungsmittel (10, 11) an einem Rotor (17) befestigt sind, der das erste Anschlagelement (13) umfasst und sich in Bezug auf die Basis (1) um eine Achse (A) drehen kann, die im Wesentlichen parallel zu der Bewegungsbahn (T) ist, so dass das Band (12) in der verriegelten Position im Rotor (17) verriegelt ist, um durch den Rotor (17) gedreht zu werden.

2. Maschine nach dem vorhergehenden Anspruch, wobei der Rotor (17) auch zweite Verriegelungsmittel (14, 15) und ein zweites Anschlagelement (16) zum Verriegeln des Bands (12) von einer entriegelten Position in eine verriegelte Position im Rotor (17) umfasst.

3. Maschine nach dem vorhergehenden Anspruch, wobei die ersten Verriegelungsmittel (10, 11) und die zweiten Verriegelungsmittel (14, 15) in Bezug auf eine Ebene (P), die im Wesentlichen parallel zu der Bewegungsbahn (T) ist und zwischen den ersten und zweiten Verriegelungsmitteln (10, 11, 14, 15) in deren entriegelter Position verläuft, im Wesentlichen gegenüberliegend angeordnet sind.

4. Maschine nach einem der vorhergehenden Ansprüche, die auch einen Schieber (20) umfasst, der dazu ausgelegt ist, das Band (12) in die entriegelte Position im Rotor (17) zu bewegen.

5. Maschine nach dem vorhergehenden Anspruch, wobei der Schieber (20) unterhalb des Rotors (17) angeordnet ist.

6. Maschine nach Anspruch 4 oder 5, wobei sich der Schieber (20) in Bezug auf die Basis (1) in einer dritten Richtung (D3) bewegen kann, die im Wesentlichen vertikal und/oder im Wesentlichen senkrecht zu der Bewegungsbahn (T) verläuft.

7. Maschine nach einem der vorhergehenden Ansprüche, wobei die ersten und/oder zweiten Verriegelungsmittel (10, 11; 14, 15) einen Presser (10; 14) umfassen, der durch einen oder mehrere Aktuatoren (11; 15) angetrieben werden kann.

8. Maschine nach dem vorhergehenden Anspruch, wobei der Presser (10) der ersten Verriegelungsmittel (10, 11) in der entriegelten Position an das zweite Anschlagelement (16) angrenzt und/oder mit diesem ausgerichtet ist und/oder der Presser (14) der zweiten Verriegelungsmittel (14, 15) in der entriegelten Position an das erste Anschlagelement (13) angrenzt und/oder mit diesem ausgerichtet ist.

9. Maschine nach Anspruch 7 oder 8, wobei die erste Antriebsrichtung (D1) des Pressers (10) der ersten Verriegelungsmittel (10, 11) im Wesentlichen parallel zu der zweiten Antriebsrichtung (D2) des Pressers (14) der zweiten Verriegelungsmittel (14, 15) verläuft oder im Wesentlichen mit dieser ausgerichtet ist.

10. Maschine nach einem der Ansprüche 7 bis 9, wobei der Abstand zwischen den Pressern (10, 14) in deren entriegelter Position im Wesentlichen gleich der Dicke des Schiebers (20) ist.

11. Maschine nach einem der vorhergehenden Ansprüche, die einen zweiten Schlitten (24) umfasst, der dazu ausgelegt ist, sich in Bezug auf die Basis (1) mit einer Hin- und Herbewegung entlang der Bewegungsbahn (T) zu bewegen, wobei der zweite Schlitten (24) einen Applikator (25) umfasst, der dazu ausgelegt ist, eine Schicht Klebstoff auf das Band (12) aufzutragen.

## Revendications

1. Machine pour travailler des bandes (12), qui comprend une base (1), un chariot (3) et des premiers moyens de verrouillage (10, 11), dans laquelle le chariot (3) est configuré pour se déplacer par rapport à la base (1) avec un mouvement de va-et-vient le long d'une trajectoire (T), dans laquelle le chariot (3) est configuré pour recevoir un outil (2) pour travailler une bande (12) le long de la trajectoire (T) pendant le mouvement du chariot (3), dans laquelle les premiers moyens de verrouillage (10, 11) sont disposés le long de la trajectoire (T) pour verrouiller la bande (12) contre un premier élément de butée (13) d'une position déverrouillée à une position verrouillée, dans laquelle les premiers moyens de verrouillage (10, 11) sont fixés à un rotor (17) qui comprend le premier élément de butée (13) et peuvent tourner par rapport à la base (1) autour d'un axe (A) sensiblement parallèle à ladite trajectoire (T), de sorte que la bande (12) dans la position verrouillée est verrouillée dans le rotor (17) pour être tournée par le rotor (17).

2. Machine selon la revendication précédente, dans laquelle le rotor (17) comprend également des deuxièmes moyens de verrouillage (14, 15) et un deuxième élément de butée (16) pour verrouiller la bande (12) d'une position déverrouillée à une position verrouillée dans le rotor (17).

3. Machine selon la revendication précédente, dans laquelle les premiers moyens de verrouillage (10, 11) et les deuxièmes moyens de verrouillage (14, 15) sont disposés de manière sensiblement opposée par rapport à un plan (P) qui est sensiblement parallèle à ladite trajectoire (T) et passe entre les premiers et deuxièmes moyens de verrouillage (10, 11, 14, 15) dans leur position déverrouillée.

4. Machine selon l'une des revendications précédentes, qui comprend également un poussoir (20) configuré pour déplacer la bande (12) dans la position déverrouillée dans le rotor (17).

5. Machine selon la revendication précédente, dans laquelle le poussoir (20) est disposé sous le rotor (17).

6. Machine selon la revendication 4 ou 5, dans laquelle le poussoir (20) peut se déplacer par rapport à la base (1) dans une troisième direction (D3) sensiblement verticale et/ou sensiblement perpendiculaire à ladite trajectoire (T).

7. Machine selon l'une des revendications précédentes, dans laquelle lesdits premiers et/ou deuxièmes moyens de verrouillage (10, 11 ; 14, 15) comprennent un presseur (10°; 14) qui peut être entraîné par un ou plusieurs actionneurs (11°; 15).

8. Machine selon la revendication précédente, dans laquelle le presseur (10) du premier moyen de verrouillage (10, 11), dans la position déverrouillée, est adjacent et/ou aligné avec le deuxième élément de butée (16) et/ou le presseur (14) du deuxième moyen de verrouillage (14, 15), dans la position déverrouillée, est adjacent et/ou aligné avec le premier élément de butée (13).

9. Machine selon la revendication 7 ou 8, dans laquelle la première direction (D1) d'entraînement du presseur (10) des premiers moyens de verrouillage (10, 11) est sensiblement parallèle ou sensiblement alignée avec la deuxième direction (D2) d'entraînement du presseur (14) des deuxièmes moyens de verrouillage (14, 15).

10. Machine selon l'une des revendications 7 à 9, dans laquelle la distance entre les presseurs (10, 14), dans leur position déverrouillée, est sensiblement égale à l'épaisseur du poussoir (20).

11. Machine selon l'une des revendications précédentes, qui comprend un deuxième chariot (24) configuré pour se déplacer par rapport à la base (1) avec un mouvement de va-et-vient le long de ladite trajectoire (T), dans laquelle le deuxième chariot (24) comprend un applicateur (25) configuré pour appliquer une couche d'adhésif sur la bande (12).
